# NEUE EUROPÄISCHE PATENTSCHRIFT

(11) **EP 1 164 691 B2**
(45) Veröffentlichungstag und Bekanntmachung des Hinweises auf die Entscheidung über den Einspruch: **01.04.2020**
(45) Hinweis auf die Patenterteilung: 15.09.2004
(21) Anmeldenummer: 01122899.6
(22) Anmeldetag: 18.12.1998
(51) Int. Cl.: H02P 9/30

(54) **Verfahren zum Betreiben einer Windenergieanlage**
Control method of a wind power station
Procédé de commande d'une centrale éolienne

(30) Priorität: 19.12.1997 DE 19756777
(43) Veröffentlichungstag der Anmeldung: 19.12.2001
(62) Teilanmeldung aus: 98966834.8
(73) Patentinhaber: Wobben, Aloys, 26607 Aurich (DE)
(72) Erfinder: Wobben, Aloys, 26607 Aurich (DE)
(74) Vertreter: Eisenführ Speiser

(56) Entgegenhaltungen:
- DE-A- 3 438 893
- DE-C- 3 833 719
- E-40 Kurzbeschreibung; Rotor Generator Netz.

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an einen elektrischen Verbraucher, insbesondere ein elektrisches Netz.

Bei den bekannten Windenergieanlagen zum Erzeugen elektrischer Energie aus Wind wird der Generator mit dem elektrischen Verbraucher, häufig einem elektrischen Netz im Parallelbetrieb betrieben. Während des Betriebs der Windenergieanlage variiert die von dem Generator bereitgestellte elektrische Leistung in Abhängigkeit von der aktuellen Windgeschwindigkeit und somit der Windleistung. Dies hat zur Folge, dass auch die elektrische Generator-Spannung in Abhängigkeit von der Windleistung variabel ist. Dies führt zu folgenden Problemen:

Im Falle der Einspeisung der erzeugten elektrischen Leistung in ein elektrisches Netz, beispielsweise ein öffentliches Stromnetz, kommt es an einem Verknüpfungs- oder Netzanbindungspunkt, an dem die elektrische Generator-Leistung in das Netz eingespeist wird, zu einer Erhöhung der Netzspannung. Insbesondere bei starken Spannungsänderungen der Generator-Spannung kommt es zu starken, unerwünschten Änderungen der Netzspannung.

Unter besonderen Umständen kann es dazu kommen, dass die Netzspannung im Versorgungsnetz auf einen unerwünscht hohen Wert ansteigt. Dies ist insbesondere dann der Fall, wenn die abgenommene Leistung seitens der Verbraucher sehr gering ist, während in das Versorgungsnetz hohe elektrische Leistung eingebracht wird. Solche Situationen können beispielsweise nachts auftreten, wenn die elektrische Verbrauchsleistung in den Haushalten eher gering ist, während bei starkem Wind von einem Windenergiekonverter eine entsprechend hohe elektrische Leistung dem Versorgungsnetz zur Verfügung gestellt wird. Wenn die Spannung im Versorgungsnetz bzw. am Netzanbindungspunkt der Windenergieanlage über einen vorbestimmten Wert ansteigt, muss die Windenergieanlage bzw. dessen Generator vom Netz abgekoppelt werden und die Windenergieanlage müsste, weil keine Leistung mehr abgenommen werden kann, vom Netz völlig abgeschaltet werden. Eine derartige Abschaltung führt zu einer für den Betreiber der Windenergieanlage und den Betreiber des Netzwerks gleichermaßen unerwünschten Unterbrechung der Einspeisung von elektrischer Leistung.

Aus DE-PS 368 799, DE-OS 44 28 085 sowie DE-OS 30 23 195 ist es allgemein bekannt, dass bei Anlagen, wie Windkraftanlagen oder Solargeneratoren, die vom Generator bereitgestellte Leistung schwankt, was bei der Einspeisung in das Netz 24 zu den oben beschriebenen Problemen führt. Des weiteren sei auf das Dokument "European Wind Energy Conference, October 1997, DUBLIN CASTLE; IRELAND. "POWER CONTROL FOR WIND TURBINES IN WEAK GRIDS", Seiten 759 bis 762; "MAXIMUM WIND POWER PENETRATION ASSESSMENT IN WEAK GRIDS USING DY-NAMIC WIND PARK MODELS", Seiten 780 bis 783 sowie "POWER QUALITY REQUIREMENTS FOR GRID CONNECTED WINDTURBINES", Seiten 722 bis 725 verwiesen.

Ferner ist aus DE-PS 38 33 719 ein Netz und eine verbraucherversorgende Stromerzeugungsanlage in Form einer Windenergieanlage bekannt, bei welcher die elektrische Leistung, die der Generator der Windenergieanlage zur Verfügung stellt, mittels eines Wechselrichters in das Netz eingespeist wird.

Die Aufgabe der vorliegenden Erfindung besteht darin, ein Verfahren zum Betreiben einer Windenergieanlage anzugeben, die die Nachteile des Standes der Technik vermeidet und insbesondere Spannungsüberschwankungen beim Verbraucher, insbesondere einem elektrischen Netz sowie eine unerwünschte Abschaltung der Windenergieanlage vermeidet.

Die Erfindung löst die Aufgabe mit einem Verfahren mit den Merkmalen nach Anspruch 1.

Bei einer Vorrichtung der eingangs genannten Art ist durch eine Regelungseinrichtung mit einem Spannungsaufnehmer zum Aufnehmen einer beim Verbraucher anliegenden elektrischen Spannung z. B. Netzspannung die von dem Generator an den Verbraucher abgegebene Leistung in Abhängigkeit von der durch den Spannungsaufnehmer aufgenommenen Spannung regelbar ist.

Wie beschrieben, kann es bei Energieerzeugung zur Schwankung der erzeugbaren Energie kommen, was bei Windenergieanlagen abhängig von der Windstärke naturgegeben ist. Diese Schwankungen sind jedoch nicht Ausgangspunkt der Erfindung. Vielmehr beschäftigt sich die Erfindung mit dem Problem, dass es auch auf der Verbraucherseite Schwankungen im Leistungsverbrauch gibt, was sich als schwankende Netzspannung auswirkt. Solche Netzspannungen sind bekanntlich kritisch, weil die elektrischen Geräte - insbesondere Computer - häufig nur ungenügend gegen kritische Spannungsschwankungen gesichert sind. Die Erfindung sieht somit vor, dass nicht nur die Schwankung in der Energieerzeugung auf der Erzeugerseite sondern auch die Schwankung auf der Verbraucherseite bei der Einspeisung der Energie berücksichtigt wird, so dass die bereitsgestellte elektrische Spannung am Einspeisepunkt auf dem gewünschten Sollwert eingeregelt wird.

Die Erfindung vermeidet unerwünschte Schwankungen der beim Verbraucher anliegenden Spannung, insbesondere in einem Netz bestehenden elektrischen Spannung, indem die abgegebene elektrische Leistung des Generators in Abhängigkeit von der Spannung des Verbrauchers bzw. des Netzes eingeregelt wird. Dadurch werden auch unerwünschte Spannungsschwankungen vermieden, die sich aus Änderungen der Windleistung ergeben können.

Ein weiterer Vorteil der Erfindung liegt darin, dass selbst bei sehr starken Änderungen der Windleistung die Windenergieanlage nicht abgeschaltet zu werden braucht, um Netzschwankungen zu verhindern. Erfindungsgemäß wird die Windenergieanlage auch bei starken Änderungen der Windleistung weiterbetrieben, ohne dass Netzspannungsänderungen auftreten. Hierzu ist die Regelungseinrichtung mit Spannungsaufnehmern zum Aufnehmen der am Verbraucher oder dem Netz anliegenden Spannung ausgestattet.

Mit Hilfe der Erfindung können ferner auch bei konstanter Windleistung Netzspannungsschwankungen kompensiert werden, wie regelmäßig in elektrischen Netzwerken zur Elektrizitätsversorgung auftreten, da einige mit dem Netz verbundene Verbraucher zeitweilig große Leistungen aus dem Netz aufnehmen, woraus eine Spannungsreduzierung resultieren kann. Im Falle einer solchen Spannungsreduzierung kann die erfindungsgemäße Windenergieanlage eine erhöhte elektrische Leistung in das Netz einspeisen und auf diese Weise Spannungsschwankungen kompensieren. Hierzu wird beispielsweise auf der Grundlage des erfindungsgemäß aufgenommenen Netzspannungswertes die Einspeisespannung an der Schnittstelle zwischen Windenergieanlage und Netz angehoben.

Gemäß einer bevorzugten Ausführungsform des erfindungsgemäßen Verfahrens wird die abgegebene Leistung geregelt, indem die bereitgestellte elektrische Spannung auf einen gewünschten Sollwert eingeregelt wird. Hierbei kann auf besonders einfache Weise eine Netzspannungskompensation vorgenommen werden, die - wie zuvor beschrieben - beispielsweise auftreten kann, wenn ein an das Netz angeschlossener Verbraucher eine hohe Leistung benötigt.

Gemäß einer weiteren bevorzugten Ausführungsform der Erfindung wird die elektrische Spannung als Wechselspannung mit einer vorgebbaren Frequenz bereitgestellt. Auf diese Weise kann die eingespeiste Leistung an die Zustände im Netz angepaßt werden und kann die Netzfrequenz beeinflußt werden. Zweckmäßigerweise entspricht die vorgebbare Frequenz der Netzfrequenz.

Die Windenergieanlage wird in vorteilhafter Weise weitergebildet durch eine Regelungseinrichtung, die einen Mikroprozessor aufweist, da auf diese Weise eine digitale Regelung verwirklicht werden kann.

Die Erfindung wird nachstehend anhand eines Ausführungsbeispiels eines Verfahrens zum Betreiben einer Windenergieanlage unter Bezugnahme auf die Zeichnungen veranschaulicht. Es zeigen:
- Fig. 1: eine in ein Netz einspeisende Windenergieanlage in einer schematischen Darstellung;
- Fig. 2: eine erfindungsgemäße Regelungseinrichtung zum Betreiben einer Windkraftanlage; und
- Fig. 3: ein Diagramm, das den Zusammenhang zwischen Windleistung und Netzspannung veranschaulicht.

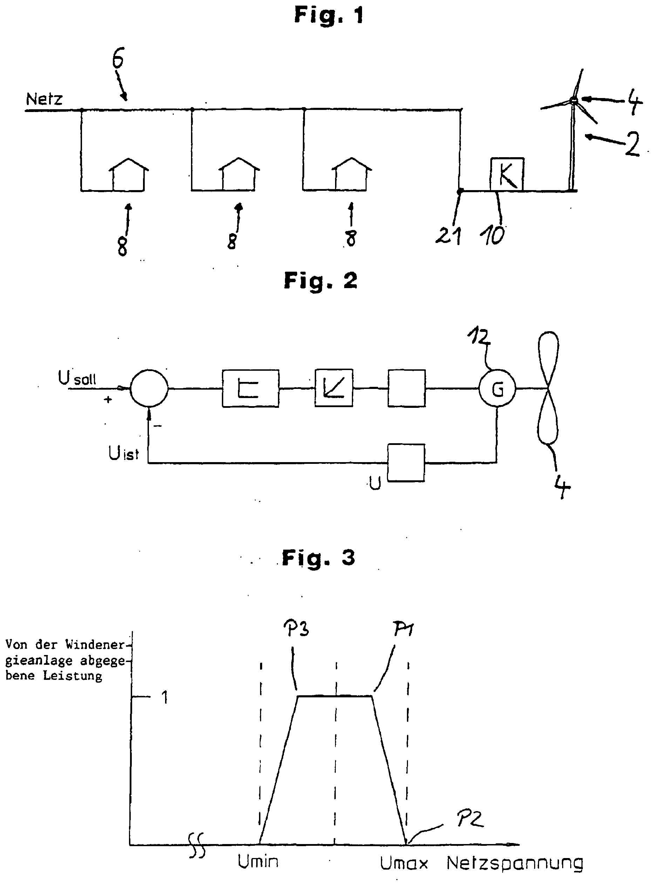

Eine in Fig. 1 schematisch dargestellte Windenergieanlage 2 mit einem Rotor 4 ist mit einem elektrischen Netz 6, das beispielsweise ein öffentliches Netz sein kann, verbunden. An das Netz sind mehrere elektrische Verbraucher 8 angeschlossen.

Der in Fig. 1 nicht dargestellte elektrische Generator der Windenergieanlage 2 ist mit einer elektrischen Steuerungs- und Regelungsanordnung 10 gekoppelt, die den in dem Generator erzeugten Wechselstrom zunächst gleichrichtet und anschließend in eine Wechselspannung umwandelt, die der Netzfrequenz entspricht. Anstelle eines Netzes 6 könnte auch ein einzelner Verbraucher von der Windenergieanlage 2 mit elektrischer Energie versorgt werden. Die Steuerungs- und Regelungsanordnung 10 weist eine Regelungseinrichtung auf.

Fig. 2 veranschaulicht die Regelungseinrichtung. Der schematisch dargestellte Rotor 4 ist mit einem Generator 12 gekoppelt, der eine elektrische Leistung bereitstellt, die von der Windgeschwindigkeit und somit der Windleistung abhängt. Die in dem Generator 12 erzeugte Wechselspannung kann zunächst gleichgerichtet und anschließend in eine Wechselspannung umgewandelt werden, die eine der Netzfrequenz entsprechende Frequenz aufweist.

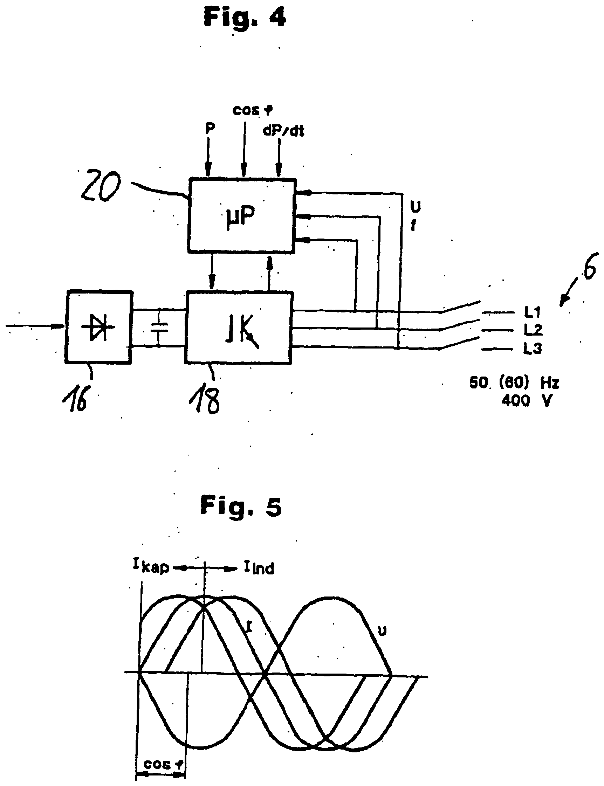

Mit Hilfe eines Spannungsaufnehmers (nicht dargestellt) wird die Netzspannung an einem Ort in dem Netz 6 (Fig. 1) ermittelt. In Abhängigkeit von der ermittelten Netzspannung wird - ggf. mit Hilfe eines in Fig. 4 dargestellten Microprozessors - eine optimale Generator-Spannung Uₛₒₗₗ (vgl. Fig. 2) berechnet. Mit Hilfe der Regelungseinrichtung wird dann die Generator-Spannung Uᵢₛₜ auf den gewünschten Spannungswert Uₛₒₗₗ eingeregelt. Durch diese Regelung der Generator-Spannung wird die von dem Generator 12 an einen Verbraucher, im Ausführungsbeispiel das Netz 6, abgegebene elektrische Leistung geregelt, die in das Netz 6 eingespeist wird. Durch eine derartig geregelte Einspeisung der von der Windenergieanlage abgegebenen Leistung können Schwankungen der Netzspannung im Netz 6 vermieden oder erheblich reduziert werden.

Das in Fig. 3 dargestellte Diagramm veranschaulicht den Zusammenhang zwischen der auf der Ordinate aufgetragenen von der Windenergieanlage abgegebenen Leistung und der auf der Abszisse aufgetragenen Netzspannung. Weicht die Netzspannung nur wenig von ihrem Sollwert ab, der zwischen den Spannungswerten Uₘᵢₙ und Uₘₐₓ liegt, so wird entsprechend dem geraden oberen Abschnitt der Kurve (gerade Linie parallel zur Abszisse) eine gleichbleibende Leistung von dem Generator an das Netz abgegeben. Steigt die Netzspannung weiter an und übersteigt einen Wert, der durch den Punkt P1 definiert ist, so wird die eingespeiste Leistung reduziert. Ist der Wert Uₘₐₓ erreicht, so ist die eingespeiste Leistung gleich Null (Punkt P2). Selbst in dem Fall, dass eine hohe Windleistung vorhanden ist, wird in Punkt P2 keine Leistung in das Netz eingespeist. Sinkt die Windleistung stark ab, so kann nur noch eine reduzierte Leistung in das Netz eingespeist werden. Selbst wenn keine Leistung seitens des Windenergiekonverters mehr abgegeben wird, wird dieser - allerdings ohne Leistungsabgabe - weiterbetrieben, so dass stets eine Leistungsabgabe erfolgen kann, sobald die Netzspannung wieder einen Wert zwischen Uₘᵢₙ und Uₘₐₓ angenommen hat.

Fig. 4 zeigt wesentliche Bestandteile der Steuerungs- und Regelungsanordnung 10 aus Fig. 1. Die Steuerungs- und Regelungsanordnung 10 weist einen Gleichrichter 16 auf, in dem die in dem Generator erzeugte Wechselspannung gleichgerichtet wird. Ein mit dem Gleichrichter 16 verbundener Frequenzumrichter 18 wandelt die zunächst gleichgerichtete Gleichspannung in eine Wechselspannung um, die als dreiphasige Wechselspannung über die Leitungen L1, L2 und L3 in das Netz 6 eingespeist wird. Der Frequenzumrichter 18 wird mit Hilfe eines Mikrocomputers 20, der Teil der gesamten Regelungseinrichtung ist, gesteuert. Hierzu ist der Mikroprozessor 20 mit dem Frequenzumrichter 18 gekoppelt. Als Eingangsgrößen für die Regelung der Spannung, mit der die von der Windenergieanlage 2 zur Verfügung gestellte elektrische Leistung in das Netz 6 eingespeist wird, sind die aktuelle Netzspannung U, die Netzfrequenz f, die elektrische Leistung P des Generators, der Blindleistungsfaktor cosϕ sowie der Leistungsgradient dP/dt. In dem Mikroprozessor 20 wird die erfindungsgemäße Regelung der einzuspeisenden Spannung verwirklicht.

Fig. 5 veranschaulicht den zeitlichen Verlauf der Spannungen und Ströme der drei Phasen des Netzes 6.

## Patentansprüche

1. Verfahren zum Betreiben einer Windenergieanlage mit einem von einem Rotor antreibbaren elektrischen Generator zum Abgeben elektrischer Leistung an ein elektrisches Netz (6), insbesondere an dessen angeschlossene Verbraucher (8),
**dadurch gekennzeichnet, dass** die von dem Generator an das Netz (6) abgegebene elektrische Leistung in Abhängigkeit von einer dem Netz (6) anliegenden elektrischen Spannung geregelt wird, und wobei zum Netz-Überspannungsschutz eine Leistungsabgabe erfolgt, die geringer ist als die verfügbare Generatorleistung der Windenergieanlage, und dass die reduzierte Leistungsabgabe bereits vor Erreichen eines definierten, maximalen Netzspannungswertes (Uₘₐₓ) nach Überschreiten eines bestimmten, Netzspannungswertes (P1) erfolgt und dass die von dem Generator an das Netz (6) abgegebene elektrische Leistung nach Überschreiten des bestimmten, Netzspannungswertes (P1) bei weiter ansteigender Netzspannung bis zum Erreichen des definierten maximalen Netzspannungswertes (Uₘₐₓ) weiter reduziert wird und dass dann, wenn die Netzspannung den definierten, maximalen Netzspannungswert (Uₘₐₓ) erreicht, die eingespeiste elektrische Leistung Null ist, und das selbst in dem Fall, wenn eine hohe Windleistung vorhanden ist, bei Erreichen des vordefinierten maximalen Netzspannungswertes (Uₘₐₓ) keine elektrische Leistung in das Netz eingespeist wird.

## Claims

1. Method for operating a wind energy system having an electrical generator, which can be driven by a rotor, for emitting electrical power to an electrical network (6), in particular to loads (8) which are connected to this network (6),
**characterized in that** the electrical power which is emitted from the generator to the network (6) is controlled as a function of an electrical voltage which is present at the network (6), and with an amount of power which is less than the available generator power from the wind energy system being emitted for network overvoltage protection, and **in that** the amount of power which is emitted is reduced even before a defined maximum network voltage value (Uₘₐₓ) is reached after exceeding a specific network voltage value (P1), and **in that** the electrical power which is emitted from the generator to the electrical grid is further reduced after the network voltage value (P1) has been exceeded with a further increase of the network voltage until the defined maximum network voltage value (Uₘₐₓ) is reached, and that the fed electrical power is zero when the network voltage value reaches the defined maximum network voltage value, and that no electrical power is fed into the electrical network when the predefined maximum network voltage value (Uₘₐₓ) is reached even in the case when there is a high wind power available .

## Revendications

1. Procédé de commande d'une éolienne avec un générateur électrique pouvant être entraîné par un rotor pour la distribution de puissance électrique à un réseau électrique (6), en particulier à ses consommateurs raccordés (8),
**caractérisé en ce que** la puissance électrique distribuée par le générateur au réseau (6) est régulée en fonction d'une tension électrique appliquée au réseau (6), et dans lequel, pour la protection contre une surtension du réseau, une distribution de puissance a lieu, qui est inférieure à la puissance de générateur disponible de l'éolienne, et que la distribution de puissance réduite a déjà lieu avant d'atteindre une valeur de tension réseau maximum définie (Uₘₐₓ) après le dépassement d'une valeur de tension réseau déterminée (P1), et que la puissance électrique distribuée par le générateur au réseau (6) après le dépassement de la valeur de tension réseau déterminée (P1) continue d'être réduite lorsque la tension réseau continue d'augmenter jusqu'à atteindre la valeur de tension réseau maximum définie (Uₘₐₓ) et qu'alors, lorsque la tension réseau atteint la valeur de tension réseau maximum définie (Uₘₐₓ), la puissance électrique injectée est nulle et ce même dans le cas où une puissance éolienne élevée est présente, lorsque la valeur de tension réseau maximum prédéfinie (Uₘₐₓ) est atteinte, aucune puissance électrique n'est injectée dans le réseau.
